# EUROPEAN PATENT APPLICATION

(11) **EP 4 541 916 A1**
(43) Date of publication of application: **23.04.2025**
(21) Application number: 23823197.1
(22) Date of filing: 14.06.2023
(51) Int. Cl.: C22C 38/00, C22C 38/02, C22C 38/38, C22C 38/06, C22C 38/18, C22C 38/14, C22C 38/32, C22C 38/48, B22D 11/00, C21D 8/02, C23C 2/06

(54) **800MPA-GRADE HIGH-HOLE-EXPANSION HOT-DIP GALVANIZED STEEL PLATE AND MANUFACTURING METHOD THEREFOR**

(30) Priority: 15.06.2022 CN 202210675493
(71) Applicant: BAOSHAN IRON & STEEL CO., LTD., Shanghai 201900 (CN)
(72) Inventor: LIU, Chunsu, Shanghai 201900 (CN); ZHANG, Yulong, Shanghai 201900 (CN); MA, Xuedan, Shanghai 201900 (CN); HUANG, Caigen, Shanghai 201900 (CN); CHEN, Guang, Shanghai 201900 (CN); JIN, Xinyan, Shanghai 201900 (CN); ZHU, Xiaodong, Shanghai 201900 (CN); LUO, Shuai, Shanghai 201900 (CN)
(74) Representative: Kuhnen & Wacker Patent- und Rechtsanwaltsbüro PartG mbB
(86) International application number: PCT/CN2023/100255
(87) International publication number: WO 2023/241631

(57) **Abstract**

Disclosed in the present invention are a 800MPa-grade high-hole-expansion hot-dip galvanized steel plate and a manufacturing method therefor. The steel plate comprises a substrate and a hot-dip galvanizing layer plated on at least one surface of the substrate, wherein the substrate contains Fe and inevitable impurity elements, and further contains the following chemical elements in percentage by mass: 0.03-0.08% of C, 0<Si≤0.45%, 1.3-1.8% of Mn, 0.02-0.1% of Al, 0.2-0.6% of Cr, 0.05-0.15% of Ti, Nb≤0.05%, and B≤0.003%, and the mass percentage contents of N, Ti and Nb also satisfying 0.01%≤(Ti-3.43N+0.52Nb)/4≤0.03%. The 800MPa-grade high-hole-expansion hot-dip galvanized steel plate has very excellent mechanical properties, longitudinal yield strength thereof being ≥660MPa, tensile strength thereof being ≥780MPa, an elongation percentage A50 thereof being ≥15%, a punching hole-expansion rate thereof being ≥50% and a reaming hole-expansion rate being ≥80%.

## Description

### Technology Field

The disclosure relates to a steel plate and a manufacturing method thereof, and in particular to a hot-dip galvanized steel plate and a manufacturing method thereof.

### Background Art

In recent years, due to the rapid development of the automobile industry, the requirements for lightweight automobiles raised by the market and users has been growing higher. Lightweighting has become a development trend in the automobile industry, and the use of high-strength steel plates in automobile structural parts has also been increased.

In the actual preparation of high-strength steel, more and more automobile models starts to produce automobile chassis parts by using 80kg-grade steel plates, which not only have specific requirements on the strength and elongation of the steel, but also have specific requirements on the hole expansion performance of the steel. In addition to the above requirements on the strength, elongation and hole expansion properties, the corrosion resistance of steel also needs to be further improved so as to meet the corrosion resistance requirements of automotive parts in different use environments and extend the service life of the vehicle. Meanwhile, the ordinary hot-rolled and cold-rolled plates and pickled plates of the art can no longer meet the requirements of the automotive industry, and the hot-dip galvanized plates are one of the effective ways to improve the corrosion resistance of automotive parts.

In view of the above, the inventor wishes to develop a unique 800MPa grade high hole expansion hot-dip galvanized steel plate and the manufacture method thereof, so as achieve said processing performance, corrosion resistance and manufacturability of the material and meet the current requirements of the market and users.

In the prior art, although some steel plates with good performance properties have been developed by the researchers, they still cannot meet requirements on some performance, e.g. specific strength and manufacturing process parameters, and still have insufficient performance.

According to an example, a Chinese patent reference, with the publication number CN109055867A, a publication date of December 21, 2018 and entitled "A Method for Producing High-hole-expansion Hot-dip Galvanized Plates with a Tensile strength of 540 MPa", discloses a method for producing high-hole-expansion hot-dip galvanized plates with a tensile strength of 540 MPa. The method is characterized in that the pickled plate is directly galvanized without cold rolling, thus it is a short-process method. However, the tensile strength of the steel plate produced by this method is merely 540 MPa.

According to another example, a Chinese patent reference, with the publication number of CN108396259A, a publication date of August 14, 2018, and entitled "A Hot-rolled Galvanized Steel Plate with High Hole Expansion Performance and the Manufacture Method Thereof", discloses a hot-rolled galvanized steel plate with high hole expansion performance and its manufacturing method, wherein the steel plate has a yield strength ≥600MPa and a hole expansion ratio ≥40%. The steel plate has a composition containing 0.5-2.5% of Si. The Si content is relatively high, thus red iron scale may be easily formed on the surface thereof, which is unfavorable for the control of the galvanized surface. In the technical solution of this reference, the steel has relatively high Si content.

According to a further example, a Chinese patent reference, with the publication number of

CN104513930A, a publication date of April 15, 2015 and entitled "Ultra-high Strength Hot-rolled complex phase Steel Plate and Steel Strip with Good Bending and Hole-expansion Performance and Manufacturing Method thereof", discloses an ultra-high strength hot-rolled complex phase steel plate and steel strip with good bending and hole expansion performance and a manufacturing method thereof. The technical solution of this reference discloses the performance design and manufacture method of the hot-rolled pickled plate. The design of the chemical composition does not consider the role of the B element. At the same time, it does not disclose the influence of the hot-dip galvanizing process on the performance of the hot-dip galvanized steel plate.

### Summary of the Invention

One of the objects of the present disclosure is to provide an 800MPa grade high hole expansion hot-dip galvanized steel plate. The 800MPa grade high hole expansion hot-dip galvanized steel plate adopts a well-designed chemical composition and can exhibit good comprehensive mechanical properties. It has high strength and high corrosion resistance while exhibiting high hole expansion ratio. It can be used for the manufacture of automobile body structural parts and automobile chassis parts, and can also be used in other application fields requiring high strength, weight reduction, etc., thus it has good application prospects.

In order to achieve the above said object, the present disclosure provides an 800MPa-grade high-hole-expansion hot-dip galvanized steel plate, comprising a substrate plate and a hot-dip galvanizing layer plated on at least one surface of the substrate plate, wherein the substrate plate comprises Fe and inevitable impurity elements, and further comprises the following chemical elements in percentage by mass:
0.03-0.08% of C, 0<Si≤0.45%, 1.3-1.8% of Mn, 0.02-0.1% of Al, 0.2-0.6% of Cr, 0.05-0.15% of Ti, Nb≤0.05% and B≤0.003%; and
the mass percentages of N, Ti and Nb also satisfy the relation of 0.01%≤(Ti-3.43N+0.52Nb)/4≤0.03%.

According to another embodiment, the 800MPa-grade high-hole-expansion hot-dip galvanized steel plate of the present disclosure comprises the following chemical elements in percentage by mass
0.03-0.08% of C, 0<Si≤0.45%, 1.3-1.8% of Mn, 0.02-0.1% of Al, 0.2-0.6% of Cr, 0.05-0.15% of Ti, Nb≤0.05%, B≤0.003%, and the balance amount of Fe and inevitable impurity elements; and
the mass percentages of N, Ti and Nb also satisfy the relation of 0.01%≤(Ti-3.43N+0.52Nb)/4≤0.03%.

In the substrate plate of the 800MPa-grade high-hole-expansion hot-dip galvanized steel plate of the present disclosure, each of the chemical elements have been designed according to the following principles:
C: In the substrate plate of the 800MPa grade high hole expansion hot-dip galvanized steel plate described in the present disclosure, while considering that the C content largely determines the tensile strength level of the steel plate, C is used for solid solution strengthening and forming sufficient amount of precipitation strengthening phase to ensure the strength of the steel; but when the mass percentage of C is too high, the carbide particles will become coarse, which is unfavorable for the hole expansion performance. Therefore, in order to ensure that this grade of steel has both high hole expansion and strength, while achieving good forming and welding properties, the mass percentage of the C element in the substrate plate of the 800MPa grade high hole expansion hot-dip galvanized steel plate described in the present disclosure is controlled in the range of 0.03-0.08%.

Of course, in some preferable embodiments, the mass percentage of the C element may be preferably controlled in the range of 0.04-0.07% so as to achieve better effects.

Si: In the substrate plate of the 800MPa grade high hole expansion hot-dip galvanized steel plate described in the present disclosure, the Si element has the function of solid solution strengthening and enhancing the steel plate strength. Meanwhile, the addition of Si can increase the process hardening rate and the uniform elongation and total elongation under a certain strength, which is helpful for improving the elongation of the steel plate. Additionally, Si can also prevent the precipitation of carbides and reduce the formation of pearlite phase. However, it should be noted that the inclusion of silicon in steel tends to cause the formation of surface defects such as fayalite (2FeO-SiO₂) iron oxide scale on the surface of the steel plate, which has an adverse effect on the surface quality. Based on this, in the substrate plate of the 800MPa grade high hole expansion hot-dip galvanized steel plate described in the present disclosure, the mass percentage of Si element is controlled to be in the range of 0<Si≤0.45%.

Of course, in some preferable embodiments, the mass percentage of Si element may be preferably controlled to be in the range of 0.05<Si≤0.45% so as to achieve better effects. In some preferable embodiments, the mass percentage of Si element may be preferably controlled to be in the range of 0<Si≤0.2% so as to achieve better effects. In some preferable embodiments, the mass percentage of Si element may be preferably controlled to be in the range of 0.05<Si≤0.2% so as to achieve better effects.

Mn: In the substrate plate of the 800MPa grade high hole expansion hot-dip galvanized steel plate described in the present disclosure, the Mn element is used as a solid solution strengthening element. The steel will have insufficient strength when it has low mass percentage of the Mn element, while the steel plate will have reduced plasticity when the mass percentage of the Mn element is too high. In addition, Mn will also delay the transformation of pearlite, improve the hardenability of steel and decrease the bainite transformation temperature, thus refining the organizational substructure of steel, ensuring the formation of lath substructure, ensuring the tensile strength of the product while achieving good formability. Therefore, while considering about the influence of the Mn element content on the properties of steel, the mass percentage of the Mn element in the substrate plate of the 800MPa grade high hole expansion hot-dip galvanized steel plate described in the present disclosure is controlled to be in the range of 1.3-1.8%.

Al: In the substrate plate of the 800MPa grade high hole expansion hot-dip galvanized steel plate described in the present disclosure, Al is used in steel as a deoxidizing element, which can reduce the oxide inclusions in steel, purify steel quality, and is beneficial for improving the formability of the steel plate. However, it should be noted that the Al content in steel should not be too high. When the mass percentage of Al in steel is too high, oxidation will occur, which will further influence the continuous casting production. Therefore, while considering about the influence of the Al element on the performance of the steel plate in the technical solution, the mass percentage of Al in the substrate plate of the 800MPa grade high hole expansion hot-dip galvanized steel plate described in the present disclosure is controlled to be in the range of 0.02-0.1%.

Cr: In the substrate plate of the 800 MPa grade high hole expansion hot-dip galvanized steel plate described in the present disclosure, the Cr element is used as an element for inhibiting the generation of pearlite, hence it is beneficial for the formation of bainite structure, and thus is ultimately beneficial for the improvement of strength and hole expansion ratio. The inventors have conducted research and have found that when the mass percentage of Cr in steel is less than 0.15%, it cannot provide significant effect on the CCT curve; but when the mass percentage of Cr in steel is too high, it will not only lead to an increase in alloy cost, but also tends to bring about the formation of more martensitic structure. Based on this, in the substrate plate of the 800MPa grade high hole expansion hot-dip galvanized steel plate described in the present disclosure, the mass percentage of the Cr element is controlled to be in the range of 0.2-0.6%.

Of course, in some preferable embodiments, the mass percentage of Cr can also be preferably controlled to be in the range of 0.2-0.35% so as to achieve better effects.

Ti: In the substrate plate of the 800MPa grade high hole expansion hot-dip galvanized steel plate described in the present disclosure, Ti is one of the important precipitation strengthening and grain refinement strengthening elements. Especially in the hot-dip galvanizing annealing process, Ti has provided additional precipitation strengthening effect and the fixation of C, which are beneficial for improving the strength and elongation of the steel plate. Therefore, in order to achieve the beneficial effect of the Ti element, the mass percentage of the Ti element is controlled to be in the range of 0.05-0.15% in the present disclosure.

Nb: In the substrate plate of the 800MPa grade high hole expansion hot-dip galvanized steel plate described in the present disclosure, Nb is one of the important precipitation strengthening and grain refinement strengthening elements. However, when the mass percentage of Nb is higher than 0.05%, the strengthening effect of Nb is close to saturation and the cost is relatively high. Therefore, in order to ensure the beneficial effects of the Nb element while controlling the production cost, the mass percentage content of the Nb element is controlled to be Nb≤0.05% in the present disclosure.

Of course, in some preferable embodiments, the mass percentage of Nb can also be preferably controlled to be Nb≤0.02% so as to achieve better effects.

B: In the substrate plate of the 800MPa grade high hole expansion hot-dip galvanized steel plate described in the present disclosure, B is beneficial for expanding the bainite phase region, thus ensuring that the steel plate can produce a bainite structure during cooling after rolling, and thus significantly improving the strength and hardness of the steel. However, it should be noted that the content of element B in steel should not be too high. An excessively high amount of B element will render the formation of excessive martensite structure in the steel plate, resulting in a decrease in the hole expansion ratio and elongation of the steel. Therefore, the mass percentage content of the B element is controlled to be B≤0.003% in the present disclosure.

In addition, it should be noted that in the technical solution designed by the present disclosure, while the mass percentage of each chemical element in the substrate being controlled, and the mass percentages of N, Ti, and Nb in the substrate plate is further controlled to satisfy the relation of 0.01%≤(Ti-3.43N+0.52Nb)/4≤0.03%, wherein, N is an impurity element in the substrate plate.

According to such a design concept, the main purpose for adding high content of Ti and Nb into steel is to ensure that dispersed and fine nano-scale carbides can be precipitated in the steel strip during the annealing and hot-dip galvanizing, thereby achieving a high precipitation strengthening effect. In the present disclosure, the C content has been designed in coordination with the Ti and Nb contents to ensure sufficient precipitation of Ti and Nb. Therefore, a hot-dip galvanized steel plate with high strength and high hole expansion ratio can only be produced when the mass percentages of N, Ti and Nb elements satisfy the above-indicated relation of "0.01%≤(Ti-3.43N+0.52Nb)/4≤0.03%", together with the addition of proper amount of Cr element, to obtain a bainite structure without pearlite that affects the hole expansion performance during the hot rolling coiling and annealing hot-dip galvanizing process (and Cr has good tempering resistance, which is beneficial for maintaining the strength of bainite during the annealing step), in combination with claimed manufacture process.

Furthermore, in the 800MPa grade high hole expansion hot-dip galvanized steel plate described in the present disclosure, the inevitable impurity elements comprise P≤0.02%, S≤0.005% and N≤0.005%.

In the above technical solution, all of P, S and N are impurity elements in the 800MPa grade high hole expansion hot-dip galvanized steel plate described in the present disclosure. When technical conditions permit, the contents of the impurity elements in the steel plate should be minimize so as to produce steel with better performance and quality.

Therefore, in the 800MPa grade high hole expansion hot-dip galvanized steel plate of the present disclosure, the P element content is controlled to be P≤0.02%, the S element content is controlled to be S≤0.005%, and the N element content is controlled to be N≤0.005%.

Furthermore, in the 800MPa grade high hole expansion hot-dip galvanized steel plate of the present disclosure, the mass percentage of each chemical element in the substrate plate further satisfies at least one of:
C: 0.04-0.07%;
0<Si≤0.2%, preferably 0.05≤Si≤0.2%;
Cr: 0.2-0.35%;
Nb≤0.02%.

Furthermore, in the 800MPa-grade high-hole expansion hot-dip galvanized steel plate described in the present disclosure, the substrate plate microstructure has a matrix of bainite+ferrite, on which there are precipitates, and the precipitates include nano-scale precipitates.

Furthermore, in the 800MPa-grade high-hole expansion hot-dip galvanized steel plate described in the present disclosure, the volume fraction of bainite is ≥95%.

Furthermore, in the 800MPa-grade high-hole expansion hot-dip galvanized steel plate described in the present disclosure, the volume fraction of ferrite is ≤5%.

Furthermore, in the 800MPa-grade high-hole expansion hot-dip galvanized steel plate described in the present disclosure, the matrix of the substrate plate microstructure comprises 95-99% (by volume fraction) of bainite and 1-5% (by volume fraction) of ferrite.

Furthermore, in the 800MPa-grade high-hole expansion hot-dip galvanized steel plate described in the present disclosure, the nano-scale precipitates include TiC and (Ti, Nb)C, and the diameter of the nano-scale precipitates is in the range of 3-20nm.

Furthermore, in the 800MPa-grade high-hole expansion hot-dip galvanized steel plate described in the present disclosure, the precipitates further include TiN precipitates having a diameter of < 10 µm.

Furthermore, in the 800MPa-grade high-hole expansion hot-dip galvanized steel plate described in the present disclosure, the hot-dip galvanized layer has a single side average weight of 20 to 600g/m².

Furthermore, in the 800MPa-grade high-hole expansion hot-dip galvanized steel plate described in the present disclosure, the steel plate has the properties of a longitudinal yield strength of ≥660 MPa, a tensile strength of ≥780 MPa, an elongation A50 of ≥15%, a punching hole-expansion ratio of ≥50%, and a reaming hole-expansion ratio of ≥80%.

Furthermore, the 800MPa-grade high-hole expansion hot-dip galvanized steel plate described in the present disclosure has a longitudinal yield strength of ≥675 MPa, preferably 675-810 MPa.

Furthermore, the 800MPa-grade high-hole expansion hot-dip galvanized steel plate described in the present disclosure has a tensile strength of ≥ 800 MPa, preferably 800-870MPa.

Furthermore, the 800MPa-grade high-hole expansion hot-dip galvanized steel plate described in the present disclosure has an elongation A50 of ≥18%, preferably 18-20%.

In some embodiments, the 800MPa-grade high-hole expansion hot-dip galvanized steel plate described in the present disclosure has a punching hole-expansion ratio of ≥55%, preferably ≥60%. In some embodiments, the 800MPa-grade high-hole expansion hot-dip galvanized steel plate described in the present disclosure has a punching hole expansion ratio of 50-80%.

In some embodiments, the 800MPa-grade high-hole expansion hot-dip galvanized steel plate described in the present disclosure has a reaming hole-expansion ratio of ≥90%, preferably ≥95%. In some embodiments, the 800MPa-grade high-hole expansion hot-dip galvanized steel plate described in the present disclosure has a reaming hole-expansion ratio of 80-120%, preferably 90-120%.

In some embodiments, the 800MPa-grade high-hole expansion hot-dip galvanized steel plate described in the present disclosure has a longitudinal yield strength of 675-810MPa, a tensile strength of 800-870MPa, an elongation of 18-20%, a punching hole-expansion ratio of 50-80%, and a reaming hole-expansion ratio of 80-120%.

In some embodiments, the 800MPa-grade high-hole expansion hot-dip galvanized steel plate described in the present disclosure has a yield strength of 678-801MPa, a tensile strength of 803-862MPa, an elongation A50 of 18-20%, a punching hole-expansion ratio of 52-82%, and a reaming hole-expansion ratio of 85-117%.

Accordingly, another object of the present disclosure is to provide a method for manufacturing the above-indicated 800MPa grade high hole expansion hot-dip galvanized steel plate of the present disclosure. The 800MPa grade high hole expansion hot-dip galvanized steel plate manufactured by the manufacture method has high strength and excellent corrosion resistance as well as high hole-expansion ratio, thus it has good application prospects.

In order to achieve the above object, the present disclosure proposes a method for manufacturing the above said 800MPa grade high hole expansion hot dip galvanized steel plate, comprising the steps of:
(1) smelting and casting;
(2) hot rolling: the slab is heated to 1200-1280 °C and kept under such a temperature; then it is rolled with the rough rolling outlet temperature being controlled to be ≥1000 °C, the finishing rolling outlet temperature being controlled to be 840-950 °C, and the rolling speed of the finishing rolling being controlled to be ≥7.5m/s; after finishing rolling, the steel plate is water-cooled at a cooling rate of 40-150 °C/s to a coiling temperature of 430-540 °C, under which it is coiled;
(3) pickling;
(4) annealing: after pickling, the steel coil is annealed and soaked in a combustion non-oxidizing continuous annealing furnace, wherein the heating rate is ≥5 °C/s, the annealing soaking temperature is in the range of 480-740 °C, the annealing soaking section has a duration of 30-300s, and the cooling rate after the soaking is ≥3 °C/s;
(5) hot dip galvanizing; and
(6) planarizing.

In the above said technical solution of the present disclosure, the heating temperature of the slab used in step (2) is particularly important for the performance and surface of the hot-dip galvanized steel containing Ti, as Ti will incur the precipitation of a large number of large-size (Ti, Nb)(C, N) precipitates during the continuous casting process. The heating temperature is configured to be ≥1200 °C, and the main purpose is to ensure that the solid solution of the alloy elements, such as Ti, can be maximized during the heating process of the slab, so as to ensure that subsequent micro-alloys, such as Ti, etc., can be precipitated as nanoscale precipitates during the hot rolling and coiling, especially during annealing and hot-dip galvanizing. However, it should be noted that the heating temperature should not be too high. When the heating temperature exceeds 1280 °C, the grains tends to coarsen, which is unfavorable for the toughness of the steel plate. Meanwhile, thicker iron oxide scale will be formed, which is unfavorable for the dephosphorization from the iron oxide scale, and ultimately affects the surface quality of hot-dip galvanizing. The heating temperature in the hot rolling process of the present disclosure is preferably controlled in the range of 1200-1280 °C.

Furthermore, the control of the rough rolling temperature and the rolling speed for the hot rolling process have substantial impact on micro-alloying elements such as Ti, etc. During the rough rolling under lower temperature and the finishing rolling process, the inclusion of Ti will incur the precipitation of Ti carbides and carbonitrides having larger size, which is unfavorable for the improvement of the final strength. Therefore, in the hot rolling process of the present disclosure, the rough rolling outlet temperature is controlled to be ≥1000 °C and the rolling speed of the finishing rolling is controlled to be ≥7.5m/s. In some embodiments, the rough rolling outlet temperature is controlled to be 1000-1080°C. In some embodiments, the rolling speed of the finish rolling is controlled to be 7.5-11 m/s.

Furthermore, the finishing rolling outlet temperature, coiling temperature, and water cooling rate adopted for the hot rolling process have great influence on the microstructure. When the finishing rolling outlet temperature is too low and when the water cooling rate is too low, block ferrite tends to be formed. When the coiling temperature is too high, higher ferrite and pearlite contents will be incurred. When the coiling temperature is too low, martensite structure may be formed. Therefore, in the hot rolling process of the present disclosure, the finishing rolling outlet temperature is controlled to 840-950°C; after the finishing rolling, the steel plate is water-cooled at a cooling rate of 40-150°C/s to 430-540 °C for coiling to control a more sufficient bainite phase transition. In some embodiments, the finishing rolling outlet temperature is controlled to be 870-930°C. In some embodiments, the cooling rate after finish rolling is 50-110 °C/s.

Accordingly, in the annealing process of the above said step (4) of the present disclosure, the annealing soaking temperature is in the range of 480-740 °C, as the most intense precipitation of (Ti, Nb)(C, N) may occur in such a temperature range. When being heated and annealed under a temperature below the austenite transition point Ac1, the steel plate maintains a hot-rolled single-phase structure of bainite. When being heated and annealed under a temperature above the austenite transition point Ac1, and the cooling speed after soaking being ≥3 °C/s, the generation of excessive ferrite structure can be avoided, which is beneficial to the improvement of the hole expansion ratio.

It should be noted that in the technical solution designed by the present disclosure, in certain embodiments, before annealing, the steel strip can be transmitted to an open flame furnace and subjected to pre-oxidation so as to obtain a steel plate with a pre-oxidation film formed on the surface thereof, and the thickness of the pre-oxidation film is controlled to be 60-120 nanometers; after the pre-oxidation, it is transmitted to an annealing furnace and subjected to an annealing treatment so as to obtain a steel plate with a surface reduced with hydrogen.

Furthermore, in the manufacture method of the present disclosure, in step (2), the heating temperature is controlled to be 1250-1280°C.

Furthermore, in the manufacture method of the present disclosure, in step (2), the duration of the temperature keeping process is 1-3 hours.

Furthermore, in the manufacture method of the present disclosure, in step (2), the finishing rolling outlet temperature is controlled to be 840-920°C; and/or the coiling temperature is controlled to be 430-500°C.

Furthermore, in the manufacture method described in the present disclosure, in step (3), the pickling stretching-bending straightening elongation is controlled to be 0.2-2%, the pickling speed is controlled to be 60-150 m/min, the last pickling acid tank in the pickling step is controlled to have a temperature of 80-90°C and an iron ion concentration of 30-40 g/L.

Furthermore, in the manufacture method described in the present disclosure, in step (4), the annealing soaking temperature is 650-730°C; and/or the annealing soaking section has a duration of 30-120s.

Furthermore, in the manufacture method of the present disclosure, in step (4), the heating rate is 5 to 20°C/s, preferably 5 to 15°C/s.

Furthermore, in the manufacture method of the present disclosure, in step (4), the cooling rate after the soaking is 3-25°C/s; in some embodiments, the cooling rate is 12 to 25°C/s.

Furthermore, in the manufacture method described in the present disclosure, in step (5), the temperature of the hot-dip galvanizing pot is 440-480°C.

Furthermore, in the manufacture method of the present disclosure, in step (6), the planarization rate is 0.05-1.3%, preferably the planarization rate is 0.2%-0.4%.

Furthermore, in the manufacture method of the present disclosure, in step (6), the final thickness of the steel plate thus obtained is ≤5 mm.

When compared with the prior art, the 800MPa grade high hole expansion hot-dip galvanized steel plate and the manufacture method thereof as described in the present disclosure have the following advantages and beneficial effects:
According to the present disclosure, an economical and rational chemical composition design is adopted, which also coordinates with the existing continuous hot rolling production line and hot-dip galvanizing production line, to produce 800MPa grade high hole expansion hot-dip galvanized steel plates with ultra-high strength and hole expansion ratio. When compared with the traditional method for manufacturing the hot-dip galvanized plate, the manufacture process optimized and designed by the present disclosure omits the cold rolling process, shortens the process flow, improves the production efficiency, saves energy and can effectively reduce production cost.

The 800MPa grade high hole expansion hot-dip galvanized steel plate prepared in the present disclosure has high hole-expansion ratio, high strength, high corrosion resistance, etc. It has a longitudinal yield strength of ≥660MPa, a tensile strength of ≥780MPa, an elongation A50 of ≥15%, a punching hole-expansion ratio of ≥50%, and a reaming hole-expansion ratio of ≥80%. It can be used as automobile body structural parts and automobile chassis parts, and can also be used in other applications requiring high strength and weight reduction, and has good application prospects.

### BRIEF DESCRIPTION OF THE DRAWINGS

FIG. 1 is a photograph showing the typical metallographic structure of the substrate plate of the 800 MPa grade high hole expansion hot-dip galvanized steel plate of Example 1.
FIG. 2 is a photograph showing the large TiN particles contained in the comparative steel plate of Comparative Example 8.

### DETAILED DESCRIPTION

The 800MPa grade high hole expansion hot-dip galvanized steel plate and its manufacture method as described in the present disclosure will be further explained and illustrated below in combination with specific embodiments and drawings. However, such explanation and illustration do not constitute an improper limitation on the technical solution of the present disclosure.

### Examples 1-11 and Comparative Examples 1-10

The chemical elements, by mass percentage, of the substrate plate of the 800 MPa grade high hole expansion hot-dip galvanized steel plates of Examples 1-11 and the comparative steel plates of Comparative Examples 1-10 are summarized in Table 1.

**Table 1. (in wt%, with the balance content being Fe and inevitable imourities other than P S and N)**

| Example No. | Steel No. | Chemical composition | | | | | | | | | | | (Ti-3.43N+0 .52Nb)/4 |
|---|---|---|---|---|---|---|---|---|---|---|---|---|---|
| | | C | Si | Mn | P | S | N | Al | Cr | B | Ti | Nb | |
| Example 1-4; Comparative Example 1-2 | A | 0.065 | 0.05 | 1.75 | 0.010 | 0.0009 | 0.0045 | 0.038 | 0.35 | - | 0.13 | - | 0.029 |
| Example 5-7; Comparative Example 3-6 | B | 0.070 | 0.10 | 1.70 | 0.013 | 0.0011 | 0.0042 | 0.035 | 0.35 | - | 0.10 | 0.05 | 0.028 |
| Example 8 | C | 0.080 | 0.30 | 1.30 | 0.010 | 0.0050 | 0.0040 | 0.025 | 0.55 | - | 0.08 | - | 0.017 |
| Example 9 | D | 0.030 | 0.45 | 1.80 | 0.014 | 0.0009 | 0.0023 | 0.029 | 0.60 | 0.0008 | 0.05 | - | 0.011 |
| Example 10 | E | 0.040 | 0.20 | 1.55 | 0.011 | 0.0013 | 0.0050 | 0.10 | 0.45 | - | 0.09 | 0.01 | 0.020 |
| Example 11 | F | 0.069 | 0.15 | 1.62 | 0.020 | 0.0015 | 0.0025 | 0.033 | 0.20 | 0.003 | 0.10 | - | 0.023 |
| Comparative Example 7 | G | **0.120** | 0.25 | 1.65 | 0.010 | 0.0020 | 0.0036 | 0.025 | 0.33 | - | 0.05 | - | **0.009** |
| Comparative Example 8 | H | 0.065 | 0.08 | 1.75 | 0.010 | 0.0009 | **0.010** | 0.038 | 0.35 | - | 0.05 | - | **0.004** |
| Comparative Example 9 | I | 0.065 | 0.08 | **1.0** | 0.010 | 0.0009 | 0.0045 | 0.038 | 0.35 | - | 0.13 | - | 0.029 |
| Comparative Example 10 | J | 0.065 | 0.08 | 1.75 | 0.010 | 0.0009 | 0.0045 | 0.038 | **0.10** | - | 0.13 | - | 0.029 |

| | | | | | | | | | | | | | |
|---|---|---|---|---|---|---|---|---|---|---|---|---|---|
| Note: In above Table 1, the formula "(Ti-3.43N+0.52Nb)/4" represents the TiC precipitation equivalent, wherein each of N, Ti and Nb represents the corresponding mass percentage of each chemical element. | | | | | | | | | | | | | |

The 800MPa grade high hole expansion hot-dip galvanized steel plates of Examples 1-11 of the present disclosure and the comparative steel plates of Comparative Examples 1-10 are prepared by the following steps:
(1) Smelting and casting are carried out by using the chemical compositions shown in Table 1.
(2) Hot rolling: The slab obtained by smelting and continuous casting is heated to 1200-1280 °C and kept at that temperature for 1-3 hours; then it is subjected to rolling, wherein the rough rolling outlet temperature is controlled to be ≥1000 °C, the finishing rolling outlet temperature is controlled in the range of 840-950 °C, and can be preferably controlled in the range of 840-920 °C, and the rolling speed of the finishing rolling is ≥7.5m/s; after finishing rolling, the steel plate is water-cooled at a cooling rate of 40-150 °C/s to a coiling temperature of 430-540 °C under which the steel plate is subjected to coiling, and the coiling temperature can be preferably controlled in the range of 430-500°C.
(3) Pickling: in this step, the pickling stretching-bending straightening elongation is controlled to be 0.2-2%, the pickling speed is controlled to be 60-150 m/min, the last pickling acid tank in the pickling step is controlled to have a temperature of 80-90°C and an iron ion concentration of 30-40 g/L.
(4) Annealing: after pickling, the steel coil is annealed and soaked in a combustion non-oxidizing continuous annealing furnace, wherein the heating rate is ≥5 °C/s, the annealing soaking temperature is controlled in the range of 480-740 °C, the annealing soaking section has a duration of 30-300s, and the cooling rate after the soaking is ≥3 °C/s. Of course, the annealing soaking temperature may also be preferably controlled in the range of 650-730 °C, and the duration of the annealing soaking section may be 30-120 s.
(5) hot dip galvanizing: the steel plate is transmitted into the zinc pot for hot-dip galvanizing, and the temperature of the hot-dip galvanizing zinc pot is controlled at 440-480 °C.
(6) Planarizing: after the galvanizing, the steel plate is subjected to planarization with the planarization rate being controlled to be 0.05-1.3%, and finally a steel plate with a thickness of ≤5 mm is obtained.

In the present disclosure, the chemical composition design and related processes of the 800MPa grade high hole expansion hot-dip galvanized steel plates of Examples 1-11 meet the specification requirements designed by the present disclosure. The comparative steel plates of comparative examples 1-10 are also prepared by steps (1)-(6) as stated above, except that the chemical composition design and related processes of the comparative steel plates of comparative examples 1-10 comprise parameters that do not meet the design requirements of the present disclosure.

The specific process parameters of the above manufacturing process for the 800MPa grade high hole expansion hot-dip galvanized steel plates of Example 1-11 and the comparative steel plates of Comparative Example 1-10 were summarized in Table 2-1 and Table 2-2.

**Table 2-1.**

| Example No. | Steel No. | Step (2) | | | | | |
|---|---|---|---|---|---|---|---|
| | | heating temperature (°C) | rough rolling outlet temperature (°C) | finishing rolling outlet temperature (°C) | rolling speed of the finishing rolling (m/s) | cooling rate (°C /s) | coiling temperature (°C) |
| Example 1 | A | 1250 | 1050 | 910 | 8.5 | 50 | 480 |
| Example 2 | | 1250 | 1050 | 910 | 8.5 | 50 | 480 |
| Example 3 | | 1250 | 1050 | 910 | 8.5 | 50 | 480 |
| Example 4 | | 1250 | 1050 | 910 | 8.5 | 50 | 480 |
| **Comparative Example 1** | | 1250 | 1050 | 910 | 8.5 | 50 | 480 |
| **Comparative Example 2** | | 1250 | 1050 | 910 | 8.5 | 50 | 480 |
| Example 5 | B | 1250 | 1050 | 910 | 8.5 | 70 | 480 |
| Example 6 | | 1250 | 1050 | 910 | 8.5 | 70 | 430 |
| Example 7 | | 1250 | 1050 | 910 | 8.5 | 70 | 540 |
| **Comparative Example 3** | | **1150** | 1030 | 910 | 8.5 | 70 | 480 |
| **Comparative Example 4** | | 1250 | **950** | 910 | 8.5 | 70 | 480 |
| **Comparative Example 5** | | 1250 | 1050 | **820** | 8.5 | 70 | 480 |
| **Comparative Example 6** | | 1250 | 1050 | 910 | 8.5 | 70 | **580** |
| Example 8 | C | 1280 | 1050 | 910 | 7.5 | 50 | 540 |
| Example 9 | D | 1200 | 1000 | 840 | 11 | 110 | 430 |
| Example 10 | E | 1250 | 1020 | 880 | 8.5 | 70 | 500 |
| Example 11 | F | 1250 | 1080 | 950 | 9.5 | 80 | 450 |
| **Comparative Example 7** | **G** | 1250 | 1050 | 910 | 8.5 | 50 | 480 |
| **Comparative Example 8** | **H** | 1250 | 1050 | 910 | 8.5 | 50 | 480 |
| **Comparative Example 9** | **I** | 1250 | 1050 | 910 | 8.5 | 50 | 480 |
| **Comparative Example 10** | **J** | 1250 | 1050 | 910 | **7.0** | **30** | 480 |

**Table 2-2.**

| Example No. | Steel No. | Step (4) | | | | Step (5) | Step (6) |
|---|---|---|---|---|---|---|---|
| | | heating rate (°C/s) | Annealing soaking temperature(°C) | The duration of the annealing soaking section (s) | cooling rate after the soaking (°C /s) | temperature of the hot-dip galvanizing pot (°C) | planarization elongation (%) |
| Example 1 | A | 5 | 740 | 200 | 25 | 460 | 0.2 |
| Example 2 | | 5 | 720 | 200 | 25 | 465 | 0.2 |
| Example 3 | | 5 | 680 | 200 | 25 | 480 | 0.2 |
| Example 4 | | 5 | 580 | 200 | 25 | 480 | 0.2 |
| **Comparative Example 1** | | 5 | 740 | 200 | **0.5** | 460 | 0.2 |
| **Comparative Example 2** | | 5 | **760** | 200 | 25 | 460 | 0.2 |
| Example 5 | B | 13 | 720 | 80 | 12 | 465 | 0.2 |
| Example 6 | | 13 | 720 | 80 | 3 | 440 | 0.2 |
| Example 7 | | 13 | 720 | 80 | 12 | 465 | 0.2 |
| **Comparative Example 3** | | 13 | 720 | 80 | 12 | 465 | 0.2 |
| **Comparative Example 4** | | 13 | 720 | 80 | 12 | 465 | 0.2 |
| **Comparative Example 5** | | 13 | 720 | 80 | 12 | 465 | 0.2 |
| **Comparative Example 6** | | 13 | 720 | 80 | 12 | 465 | 0.2 |
| Example 8 | C | 15 | 720 | 200 | 30 | 480 | 1.3 |
| Example 9 | D | 13 | 650 | 80 | 12 | 465 | 0.2 |
| Example 10 | E | 10 | 580 | 300 | 26 | 455 | 0.4 |
| Example 11 | F | 8 | 480 | 50 | 8 | 440 | 0.2 |
| **Comparative Example 7** | **G** | 5 | 600 | 120 | 5 | 470 | 0.3 |
| **Comparative Example 8** | **H** | **3** | 550 | 30 | 18 | 465 | 0.6 |
| **Comparative Example 9** | **I** | 13 | 740 | 200 | 15 | 480 | 1.3 |
| **Comparative Example 10** | **J** | 15 | 720 | 200 | 30 | 480 | 1.3 |

It should be noted that before hot-dip galvanizing, samples of the substrate plates of the 800 MPa grade high-expansion hot-dip galvanized steel plates of the finished products of Examples 1-11 and Comparative Examples 1-10 obtained through the above process steps were taken, respectively. The microstructure of the substrate plates of the steel plates of each example and comparative example was observed and analyzed. The results observed and analyzed were summarized in the following Table 3.

Table 3 showed the microstructure observation and analysis results of the substrate plates of Example 1-11 and Comparative Example 1-10.

**Table 3.**

| Example No. | volume fraction of bainite (%) | volume fraction of ferrite (%) | diameter of the nanoscale precipitate (nm) | TiN particle diameter (µm) |
|---|---|---|---|---|
| Example 1 | 96 | 4 | 3-15 | <10 |
| Example 2 | 99 | 1 | 3-15 | <10 |
| Example 3 | 99 | 1 | 3-15 | <10 |
| Example 4 | 99 | 1 | 3-15 | <10 |
| Example 5 | 99 | 1 | 3-15 | <10 |
| Example 6 | 99 | 1 | 3-15 | <10 |
| Example 7 | 95 | 5 | 3-20 | <10 |
| Example 8 | 96 | 4 | 3-20 | <10 |
| Example 9 | 99 | 1 | 3-15 | <10 |
| Example 10 | 99 | 1 | 3-15 | <10 |
| Example 11 | 99 | 1 | 3-15 | <10 |
| Comparative Example 1 | 94 | **6** | 3-15 | <10 |
| Comparative Example 2 | **89** | **11** | 3-15 | <10 |
| Comparative Example 3 | 99 | 1 | 3-15 | <10 |
| Comparative Example 4 | 99 | 1 | **3-40** | <10 |
| Comparative Example 5 | 99 | 1 | **3-40** | <10 |
| Comparative Example 6 | **85** | **15** | 3-15 | <10 |
| Comparative Example 7 | 99 | 1 | 3-15 | <10 |
| Comparative Example 8 | 99 | **1** | **3-20** | **10-20** |
| Comparative Example 9 | 99 | 1 | 3-15 | ≤10 |
| Comparative Example 10 | 88 | **12** | 3-15 | ≤10 |

It can be seen from the above results that in the present disclosure, the microstructure matrix of the substrate plates of the 800MPa grade high hole expansion hot-dip galvanized steel plates prepared in Examples 1-11 was bainite+ferrite, and the volume fraction of bainite was in the range of 95-99%.

It should be noted that in the actual preparation, there were nanoscale precipitates, which included TiC and (Ti, Nb)C, and had a diameter of 3-20 nm, on the microstructure matrix of the substrate plates of Examples 1-11. Meanwhile, the precipitates formed on the substrate plates of Examples 1-11 also comprised TiN precipitates, which were larger particles having a specific diameter of less than 10 µm.

In order to characterize the performance properties of the final galvanized steel plates, after the above said observation of the substrate plate microstructure, finished products of the 800MPa grade high-expansion hot-dip galvanized steel plates of Examples 1-11 and the comparative steel plates of Comparative Examples 1-10 obtained through the above said process steps (1)-(6) were sampled and subjected to mechanical property tests. At the same time, the single side weight average of the hot-dip galvanized layer of the steel plates prepared by each example and comparative example was also measured. The test results were summarized in Table 4.

The following technology means were used for characterizing the performance properties:
(1) Tensile property test: the test specimen was JIS 5# stretched along the longitudinal direction, and the tensile test was performed according to GB/T 228.1-2010 "Metallic materials, tensile test, Part 1: test method under room temperature" to characterize the yield strength, tensile strength and elongation of the steel plates prepared by each example and comparative example.
(2) Hole expansion test: the hole expansion ratio was determined by a hole expansion test in which a specimen with a hole in the center was pressed into a die by using a punch to expand the center hole of the specimen until necking or through crack occurred at the edge of the hole in the specimen. Since the preparation method of the original hole in the center of the specimen might greatly influence the results of the hole expansion ratio test, the original hole in the center of the specimen was prepared by punching and reaming respectively. The subsequent tests and characterization methods were carried out according to the hole expansion ratio test method specified in the ISO/DIS 16630 standard. The test results were summarized in Table 4.

Table 4 showed the mechanical property test results as well as the single side average weight of the hot-dip galvanized layer of the 800 MPa grade high hole expansion hot-dip galvanized steel plates of Examples 1-11 and the comparative steel plates of Comparative Examples 1-10.

**Table 4.**

| Example No. | yield strength Rp0.2 (MPa) | tensile strength Rm (MPa) | elongation A50 (%) | punching hole-expansion ratio (%) | reaming hole-expansion ratio (%) | single side average weight of the hot-dip galvanized layer (g/m²) |
|---|---|---|---|---|---|---|
| Example 1 | 682 | 851 | 18.5 | 52 | 83 | 20 |
| Example 2 | 718 | 855 | 19.5 | 65 | 93 | 50 |
| Example 3 | 753 | 851 | 18.0 | 73 | 102 | 100 |
| Example 4 | 801 | 862 | 18.5 | 80 | 113 | 140 |
| Example 5 | 738 | 835 | 18.0 | 68 | 97 | 200 |
| Example 6 | 725 | 824 | 18.5 | 73 | 100 | 225 |
| Example 7 | 763 | 841 | 19.0 | 52 | 85 | 275 |
| Example 8 | 678 | 835 | 19.0 | 53 | 90 | 300 |
| Example 9 | 682 | 803 | 20.0 | 58 | 99 | 350 |
| Example 10 | 752 | 852 | 18.5 | 82 | 117 | 450 |
| Example 11 | 693 | 832 | 19.5 | 79 | 105 | 600 |
| Comparative Example 1 | 653 | 849 | 20.0 | **45** | 75 | 50 |
| Comparative Example 2 | 635 | 845 | 20.5 | **35** | 63 | 50 |
| Comparative Example 3 | **642** | **769** | 20.0 | 80 | 119 | 200 |
| Comparative Example 4 | **645** | **762** | 19.5 | 78 | 118 | 200 |
| Comparative Example 5 | **651** | **778** | 20.0 | 75 | 121 | 200 |
| Comparative Example 6 | 723 | 853 | 20.0 | **38** | 62 | 200 |
| Comparative Example 7 | 815 | 919 | 16.0 | **45** | 75 | 350 |
| Comparative Example 8 | **625** | **672** | 20.5 | **44** | 101 | 350 |
| Comparative Example 9 | **632** | **679** | 20.5 | 92 | 127 | 350 |
| Comparative Example 10 | **632** | 809 | 18.5 | **37** | 68 | 600 |

As shown in Table 4, the 800MPa grade high hole expansion hot-dip galvanized steel plates of Examples 1-11 of the present disclosure exhibited better comprehensive mechanical properties as compared with the comparative steel plates of Comparative Examples 1-10.

In the present disclosure, the 800MPa grade high hole expansion hot-dip galvanized steel plates of Examples 1-11 followed the low-carbon bainite design concept of the present disclosure. They utilized Cr to improve bainite transition and resistance to tempering softening during annealing. Meanwhile, Ti and Nb were added to enhance the precipitation strengthening effect during annealing. The 800MPa grade high hole expansion hot-dip galvanized steel plates prepared in Examples 1-11 had a yield strength of 678-801 MPa, a tensile strength of 803-862MPa, an elongation A50 of 18-20%, a punching hole expansion ratio of 52-82%, and a reaming hole expansion ratio of 85-117%.

When compared with Examples 1-4, Comparative Examples 1-2 comprised identical steel grade A and identical hot rolling process, but adopted higher annealing temperature or slower cooling rate after soaking, and the result was that the microstructure of the substrate plates thus prepared had ferrite ratios higher than 5%, resulting in decreased yield strength and decreased hole expansion ratio of the steel.

When compared with Examples 5-7, Comparative Example 3 adopted a lower heating temperature and exhibited insufficient solid solution of Nb and Ti contents; both of Comparative Example 4, which adopted lower rough rolling outlet temperature, and Comparative Example 5, which adopted lower finishing rolling outlet temperature, exhibited coarse precipitation of Nb and Ti in the form of (Ti, Nb)(C, N) during the hot rolling, which degraded their contribution to the strength and consequently resulted in reduced strength of the steel plate.

When compared with Examples 5-7, Comparative Example 6 adopted higher coiling temperature, the hot coil microstructure thus prepared had higher ferrite content, thus resulting in a higher ferrite content in the final microstructure and a lower hole expansion ratio.

Accordingly, the chemical composition design used in Comparative Examples 7-10 did not meet the requirements of the present disclosure. Comparative Example 7 comprised high C content which provided more contribution to the strength and exhibited reduced hole expansion ratio. Comparative Example 8 comprised high N content which consumed a large amount of Ti element, and thus resulting in the precipitation of a large amount of blocky TiN. As the contribution of 5-20 µm TiN to the strength was limited, the strength of the steel plate was thus reduced. Meanwhile, due to the microcracks caused by large-sized TiN at the punching edge during punching, the punching hole expansion ratio of was significantly affected. Comparative Example 9, which was designed to have low Mn element content in the steel, produced a steel plate with low strength. Comparative Example 10 had inferior hardenability due to the low Cr element content in the steel, low hot rolling cooling rate and high ferrite content in the hot coiling microstructure, thus resulting in a high ferrite content in the final microstructure and a low hole expansion ratio of the steel plate.

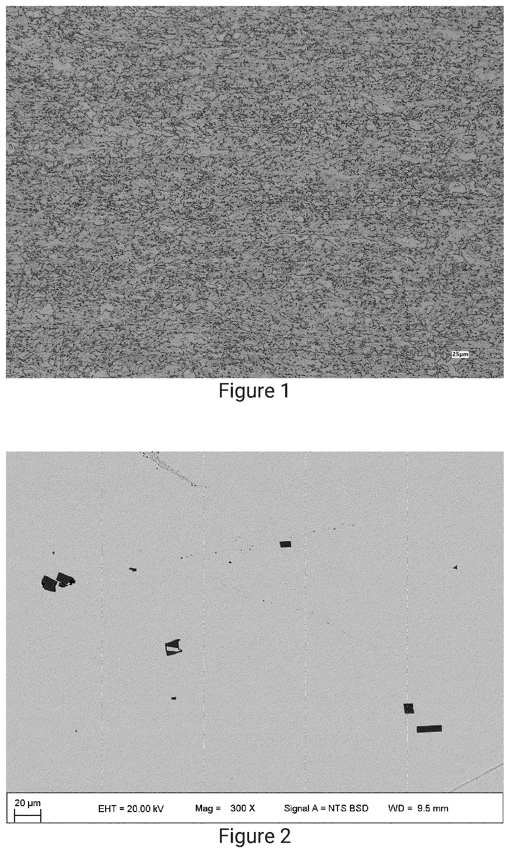

FIG. 1 is a photograph showing a typical metallographic structure of the substrate plate of the 800 MPa grade high hole expansion hot-dip galvanized steel plate of Example 1.

As shown in FIG. 1, according to this embodiment, the microstructure of the 800 MPa grade high hole expansion hot-dip galvanized complex phase steel plate of Example 1 comprises 96% bainite by volume + 4% ferrite by volume, the grain size of bainite and ferrite is 5.5 µm, the diameter of the nano-scale precipitation is 3-15 nm, and the TiN diameter is less than 10 µm.

FIG. 2 is a photograph showing large TiN particles contained in the comparative steel plate of Comparative Example 8.

As shown in FIG. 2, according this embodiment, the microstructure of Comparative Example 8 comprises 99% bainite by volume + 1% ferrite by volume, the diameter of the nano-scale precipitation is 3-20 nm, and the diameter of TiN is larger, which is 10-20 µm.

It should be noted that the combination of the various technical features in the present disclosure is not limited to the combinations described in the claims of the present disclosure or the combinations described in the specific embodiments. All technical features recorded in the present disclosure can be freely combined in any way unless there is a contradiction between them.

It should also be noted that the embodiments illustrated above are only specific embodiments of the present disclosure. Obviously, the present disclosure is not limited to the above embodiments, and similar changes or modifications made therewith can be directly derived from or easily associated with the contents disclosed by those skilled in the art, and should all fall within the protection scope of the present disclosure.

## Claims

1. A 800MPa-grade high-hole-expansion hot-dip galvanized steel plate, comprising a substrate plate and a hot-dip galvanizing layer plated on at least one surface of the substrate plate, wherein the substrate plate comprises Fe and inevitable impurity elements, and **characterized in that** the substrate plate further comprises the following chemical elements in percentage by mass:
0.03-0.08% of C, 0<Si≤0.45%, 1.3-1.8% of Mn, 0.02-0.1% of Al, 0.2-0.6% of Cr, 0.05-0.15% of Ti, Nb≤0.05% and B≤0.003%; and
the mass percentages of N, Ti and Nb also satisfy the relation of
0.01%≤(Ti-3.43N+0.52Nb)/4≤0.03%.

2. The 800MPa-grade high-hole-expansion hot-dip galvanized steel plate according to claim 1, comprising the following chemical elements in percentage by mass: 0.03-0.08% of C, 0<Si≤0.45%, 1.3-1.8% of Mn, 0.02-0.1% of Al, 0.2-0.6% of Cr, 0.05-0.15% of Ti, Nb≤0.05%, B≤0.003%, and the balance amount of Fe and inevitable impurity elements; and
the mass percentages of N, Ti and Nb also satisfy the relation of
0.01%≤(Ti-3.43N+0.52Nb)/4≤0.03%.

3. The 800MPa-grade high-hole-expansion hot-dip galvanized steel plate according to claim 1 or 2, **characterized in that** the inevitable impurity elements comprise P≤0.02%, S≤0.005% and N≤0.005%.

4. The 800MPa-grade high-hole-expansion hot-dip galvanized steel plate according to claim 1 or 2, **characterized in that** the mass percentage of each chemical element of the substrate plate further satisfies at least one of:
C: 0.04-0.07%;
0<Si≤0.2%;
Cr: 0.2-0.35%;
Nb≤0.02%.

5. The 800MPa-grade high-hole-expansion hot-dip galvanized steel plate according to claim 1 or 2, **characterized in that** the matrix of the substrate plate microstructure comprises bainite + ferrite and the matrix further has precipitates including nanoscale precipitates; preferably, the volume fraction of bainite is ≥95%; preferably, the nanoscale precipitates include TiC, (Ti, Nb)C and have a diameter in the range of 3-20nm; preferably, the precipitates further include TiN precipitates with a diameter of <10 µm.

6. The 800MPa-grade high-hole-expansion hot-dip galvanized steel plate according to claim 1 or 2, **characterized in that** the hot-dip galvanized layer has a single side average weight of 20 to 600g/m².

7. The 800MPa-grade high-hole-expansion hot-dip galvanized steel plate according to claim 1 or 2, **characterized in that** the steel plate has the following properties: a longitudinal yield strength of ≥660MPa, a tensile strength of ≥780MPa, an elongation A50 of ≥15%, a punching hole-expansion ratio of ≥50% and a reaming hole-expansion ratio of ≥80%.

8. The 800MPa-grade high-hole-expansion hot-dip galvanized steel plate according to claim 1 or 2, **characterized in that** the steel plate has the following properties: a longitudinal yield strength of ≥675MPa, preferably in the range of 675-810 MPa; a tensile strength of ≥800MPa, preferably in the range of 800-870 MPa; an elongation A50 of ≥18%, preferably in the range of 18-20%; a punching hole-expansion ratio of ≥55%, preferably in the range of 50-80%; and a reaming hole-expansion ratio of ≥90%, preferably in the range of 80-120%.

9. The 800MPa-grade high-hole-expansion hot-dip galvanized steel plate according to claim 1 or 2, **characterized in that** the 800MPa-grade high-hole-expansion hot-dip galvanized steel plate has a yield strength in the range of 678-801 MPa, a tensile strength in the range of 803-862MPa, an elongation A50 in the range of 18-20%, a punching hole-expansion ratio in the range of 52-82%, and a reaming hole-expansion ratio in the range of 85-117%.

10. A method for manufacturing the 800MPa-grade high-hole-expansion hot-dip galvanized steel plate according to any one of claims 1 to 9, **characterized in that** the method comprises the steps of:
(1) smelting and casting;
(2) hot rolling: the slab is heated to 1200-1280 °C and kept under such a temperature; then it is rolled with the rough rolling outlet temperature being controlled to be ≥1000 °C, the finishing rolling outlet temperature being controlled to be 840-950 °C, and the rolling speed of the finishing rolling being controlled to be ≥7.5m/s; after finishing rolling, the steel plate is water-cooled at a cooling rate of 40-150 °C/s to a coiling temperature of 430-540 °C, under which it is coiled;
(3) pickling;
(4) annealing: after pickling, the steel coil is annealed and soaked in a combustion non-oxidizing continuous annealing furnace, wherein the heating rate is ≥5 °C/s, the annealing soaking temperature is in the range of 480-740 °C, the annealing soaking section has a duration of 30-300s, and the cooling rate after the soaking is ≥3 °C/s;
(5) hot dip galvanizing; and
(6) planarizing.

11. The method according to claim 10, **characterized in that** in step (2): the slab is kept under such a temperature for 1-3 hours; and/or the rough rolling outlet temperature is controlled to be 1000 to 1080 °C; and/or the finishing rolling outlet temperature is controlled to be 840-920 °C; and/or the finishing rolling is conducted with a rolling speed of 7.5 to 11 m/s; and/or the cooling rate after finishing rolling is controlled to be 50 to 110°C/s; and/or the coiling temperature is controlled to be 430-500°C.

12. The method according to claim 10, **characterized in that** in step (3): the pickling stretching-bending straightening elongation is controlled to be 0.2-2%, the pickling speed is controlled to be 60-150 m/min, the last pickling acid tank in the pickling step is controlled to have a temperature of 80-90°C and an iron ion concentration of 30-40 g/L.

13. The method according to claim 10, **characterized in that** in step (4): the heating rate is 3-25°C/s; and/or the annealing soaking temperature is 650-730°C; and/or the annealing soaking section has a duration of 30-120s; and/or the cooling rate is 12-25°C/s; optionally, the steel plate is subjected to pre-oxidization to form a pre-oxidized film with a thickness of 60-120nm, before it is annealed.

14. The method according to claim 10, **characterized in that** in step (5): the temperature of the hot-dip galvanizing pot is in the range of 440-480°C.

15. The method according to claim 10, **characterized in that** in step (6): the planarization rate is in the range of 0.05-1.3%, preferably in the range of 0.2%-0.4%; and the thickness of the final steel plate is ≤5mm.
